# FASCICULE DE BREVET EUROPEEN

(11) **EP 2 387 496 B1**
(45) Date de publication et mention de la délivrance du brevet: **30.05.2018**
(21) Numéro de dépôt: 09804043.9
(22) Date de dépôt: 18.12.2009
(51) Int. Cl.: B29C 70/24, B29C 70/86, D03D 11/02, D03D 25/00, B64C 25/02, F16C 7/00, B29B 11/04, B29B 11/16, B29C 70/44

(54) **PROCEDE DE LIAISON D'UN ELEMENT STRUCTUREL EN MATERIAU COMPOSITE A UN TUBE**
VERFAHREN ZUR VERBINDUNG EINES AUS EINEM VERBUNDMATERIAL HERGESTELLTEN STRUKTURELEMENTS MIT EINEM ROHR
METHOD FOR CONNECTING A STRUCTURAL MEMBER MADE OF A COMPOSITE MATERIAL TO A TUBE

(30) Priorité: 24.12.2008 FR 0807448
(43) Date de publication de la demande: 23.11.2011
(73) Titulaire: Safran Landing Systems, 78140 Vélizy-Villacoublay (FR)
(72) Inventeur: SEREY, Jean-Pierre, F-75015 Paris (FR); DUNLEAVY, Patrick, F-91120 Palaiseau (FR)
(74) Mandataire: Parzy, Benjamin Alain
(86) Numéro de dépôt international: PCT/FR2009/001453
(87) Numéro de publication internationale: WO 2010/072916

(56) Documents cités:
- EP-A- 1 736 674
- WO-A-2007/061586
- DE-A1- 3 929 284
- DE-A1-102004 054 345
- US-A- 5 024 874
- US-A1- 2006 121 809

## Description

La présente invention concerne un procédé de fabrication d'une pièce de structure comportant un élément structurel en matériau composite relié à un tube, en particulier pour l'aéronautique.

### ARRIERE PLAN DE L'INVENTION

Les aéronefs comportent des atterrisseurs comprenant une pièce de structure principale appelée caisson qui est généralement monté pivotant sur l'aéronef pour permettre la rétraction de l'atterrisseur dans un logement de l'aéronef après le décollage. Le caisson comporte un tube dans lequel une tige portant la ou les roues en sa partie inférieure est montée pour coulisser. Le caisson comporte en outre des éléments structurels tels que des bras ou des voiles pour relier le tube à l'aéronef. En particulier, certains caissons comportent des bras latéraux s'étendant de part et d'autre du tube en se terminant par des bobines qui reçoivent des axes d'articulation du caisson à l'aéronef.

Ce type de caisson est généralement réalisé en métal, par exemple en aluminium ou en acier, notamment par fonderie ou par forgeage. Il est dans ce cas aisé de prévoir des formes de raccordement entre le tube et les bras pour assurer une résistance élevée à la liaison entre ces éléments.

Il est par ailleurs connu de réaliser des tubes en matériau composite par enroulement filamentaire de fibres sur un mandrin. Ce procédé de fabrication facilement industrialisable permet de maîtriser l'orientation et la répartition des fibres pour réaliser un tube léger avec une résistance mécanique élevée.

L'invention vise à proposer un moyen de rapporter sur ce tube des éléments structurels par exemple des poutres ou des bras latéraux qui transmettent des efforts.

On a pensé à utiliser des pièces de renfort collées s'étendant à cheval sur l'élément structurel et sur le tube. Mais ce type de liaison n'est pas satisfaisant. Les fibres de l'élément structurel se terminent au droit du tube et aucune continuité n'est assurée. Pour assurer une bonne résistance à cette liaison, il convient d'utiliser des pièces de renfort épaisses et de grande surface. L'ensemble devient plus lourd et plus difficile à réaliser, et la liaison est plus encombrante.

Les documents DE 10 2004 054345 A1 et EP 1 736 674 A décrivent des procédés de fabrication de l'art antérieur.

### OBJET DE L'INVENTION

L'invention a notamment pour but d'éviter les inconvénients de la technique antérieure, et propose pour des éléments en matériau composite un procédé simple, efficace et économique pour lier des éléments structurels à un tube. Ce procédé permet notamment de réaliser des caissons pour atterrisseur d'aéronef.

### BREVE DESCRIPTION DE L'INVENTION

On propose à cet effet un procédé de fabrication selon la revendication 1.

Les fibres de la préforme présentent une continuité entre la portion de structure proprement dite qui forme par exemple un bras et la portion de liaison au tube. Les fibres de la préforme viennent ainsi épouser le tube sur une grande surface de liaison, ce qui permet de répartir les contraintes sur des surfaces importantes et de transmettre les efforts de l'élément structurel au tube avec une excellente continuité.

La préforme peut être obtenue de diverses façons :
- on peut partir d'un tissu 3D ou 2,5 D composé de plusieurs plis superposés, dont, au niveau de la portion de liaison, on désolidarise les plis pour pouvoir les séparer en deux feuillets ;
- on peut également partir de deux flans découpés dans un tissu composé de plusieurs plis superposés, les deux flans étant superposés et cousus au niveau des portions de structure, en étant laissés libre au niveau de la portion de liaison, chacun des flans formant alors l'un des feuillets ;
- on peut encore utiliser un tissu 2,5D tissé de façon que les plis soient intimement liés au niveau des portions de structure et laissés libres au niveau des portions de liaison, de sorte que les plis puissent y être séparés en deux feuillets.

### BREVE DESCRIPTION DES DESSINS

L'invention sera mieux comprise à la lecture de la description ci-après donnée à titre d'exemple en référence aux dessins annexés dans lesquels :
- la figure 1 est une vue en perspective d'un atterrisseur d'aéronef à caisson métallique connu en soi ;
- la figure 2 est une vue en perspective d'un tube en matériau composite en cours de fabrication ;
- les figures 3 à 5 sont des vues l'ébauche d'un élément structurel et son assemblage à un tube, selon un premier mode de mise en oeuvre de l'invention, l'élément structurel étant vu en tranche;
- les figures 6 à 8 sont des vues présentant un assemblage selon un deuxième mode de mise en oeuvre de l'invention ;
- la figure 9 est une variante de la figure 8 ;
- la figure 10 est une vue présentant un assemblage selon un troisième mode de mise en oeuvre de l'invention;
- la figure 11 est une vue d'un caisson en matériau composite réalisé selon l'invention le procédé illustré aux figures 6 à 8.
- La figure 12 est une vue d'un présentant un assemblage selon un quatrième mode de mise en oeuvre de l'invention ;
- La figure 13 est une vue en coupe schématique d'un tissu 2,5D adapté à la mise en oeuvre du procédé de l'invention.

### DESCRIPTION DETAILLEE DE L'INVENTION

L'invention est ici décrite en application au domaine aéronautique, et notamment le domaine des atterrisseurs. Il va de soi que l'invention n'est pas limitée à ce type d'application.

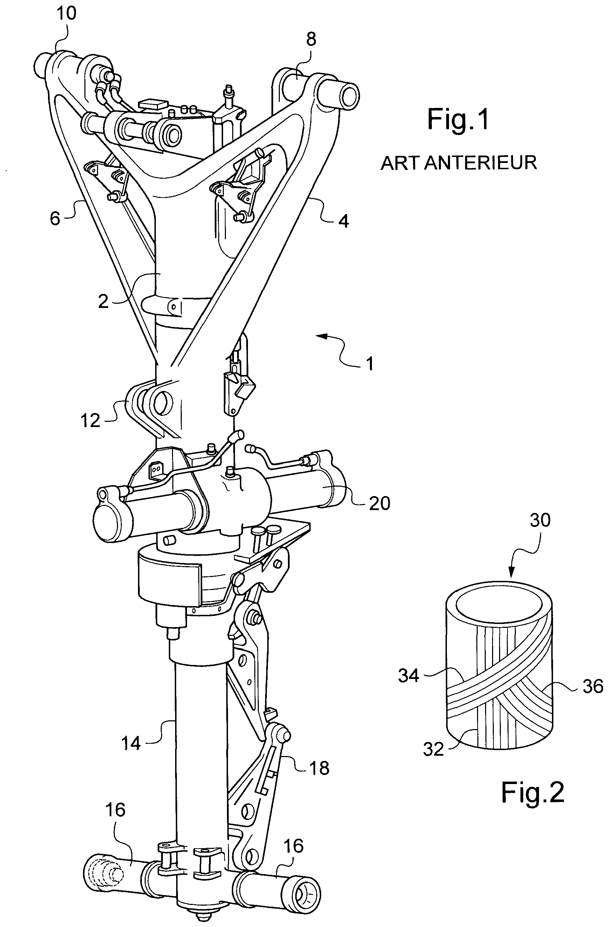

La figure 1 représente un atterrisseur auxiliaire d'aéronef, comportant un caisson 1 réalisé en alliage d'aluminium qui comprend une partie cylindrique 2, et deux bras latéraux 4, 6 se terminant en haut par des bobines 8, 10 qui reçoivent des axes d'articulation du caisson à l'aéronef. Le caisson 1 comporte en outre un organe de fixation 12, ici deux chapes formant fourche, destiné à recevoir une contrefiche (non représentée) qui stabilise l'atterrisseur en position sortie.

Une tige 14 est montée coulissante verticalement dans la partie cylindrique 2 du caisson 1. La partie inférieure de la tige 14 porte des essieux 16 recevant les roues. La tige 14 est reliée par un compas 18 à un organe d'orientation 20 fixé au caisson 1, comprenant ici des vérins hydrauliques pour commander une rotation de la tige, ce qui permet l'orientation des roues pour diriger l'avion lors du roulage au sol.

L'invention vise à permettre notamment la réalisation d'un caisson en matériau composite, comportant un élément tubulaire et un élément structurel tel qu'un bras ou une poutre.

On commence par réaliser un tube en matériau composite. A cet égard, la figure 2 présente un tube 30 réalisé par enroulement filamentaire de fibres sur un mandrin, pour déposer par exemple successivement des couches de fibres 32 suivant l'axe longitudinal puis des couches de fibres croisées 34, 36, ce procédé permettant d'ajuster la répartition des différentes fibres. Les fibres, sont lors de l'enroulement, imprégnées d'une résine qui sera par la suite polymérisée. Ce procédé permet en maîtrisant la composition et l'orientation des fibres, d'obtenir un tube léger avec des caractéristiques mécaniques élevées. Ce procédé est bien connu. En variante, le tube pourra être obtenu par d'autres procédés, par exemple par tressage.

On réalise ensuite l'élément structurel que l'on assemblera ensuite au tube 30. A cet effet, on commence par réaliser une préforme.

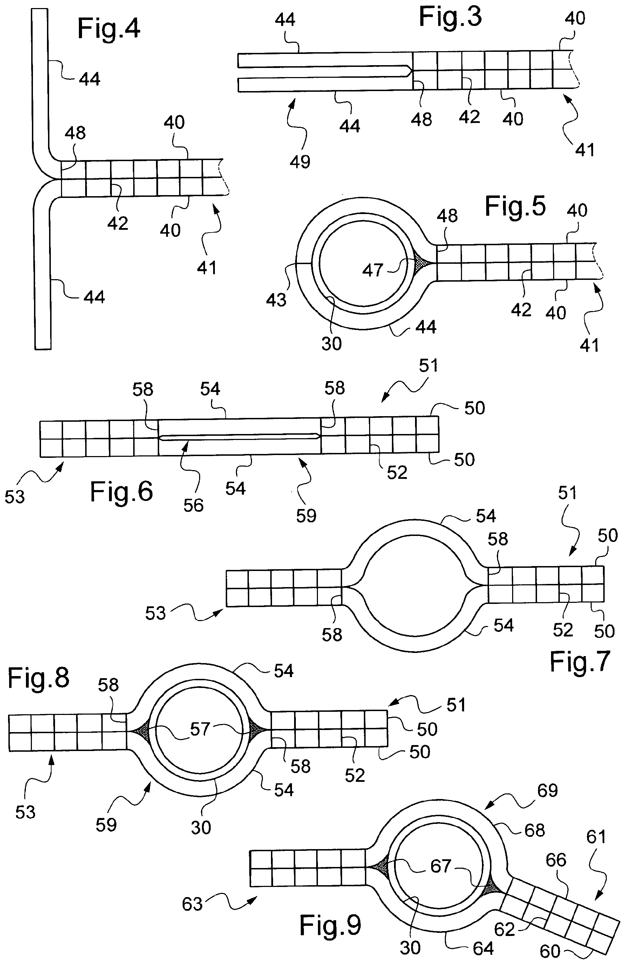

Selon un premier mode de mise en oeuvre de l'invention illustré aux figures 3 à 5, la préforme 49 est élaborée à l'aide de deux flans découpés dans une plaque de fibres constituée d'une superposition de plis reliés entre eux par exemple par tissage ou couture, pour obtenir une bonne cohésion entre les plis et permettre la manipulation des plaques. Les fibres peuvent par exemple être en verre, en aramide ou en carbone. De préférence cependant, la liaison entre les plis superposés est suffisamment lâche pour permettre un glissement des plis les uns par rapport aux autres lors de la mise en forme des flans.

La fabrication de la préforme 49 commence par le découpage de flans 40 dans une plaque de fibres. Comme cela est visible à la figure 3, les flans 40 sont ensuite superposés et liés entre eux ici par des coutures 42, tout en veillant à laisser libres les extrémités des flans 40. On définit ainsi une préforme 49 comportant une portion de structure 41, correspondant aux portions cousues, qui formera le bras de l'élément structurel, et une portion de liaison au tube, correspondant aux extrémités libres des flans 40, qui forment deux feuillets 44 en regard et séparables.

Comme cela est visible à la figure 4, on écarte les feuillets 44. Puis, dans une étape suivante représentée figure 5, on insère le tube 30 entre les feuillets 44 de sorte que les feuillets 44 entourent le tube et se rejoignent en un point 43 diamétralement opposé à la poutre 41. En variante, les deux extrémités 44 peuvent être plus courtes et ne pas se rejoindre au point 43, ou être plus longues et se superposer suivant la rigidité que l'on veut donner à la liaison. L'ensemble ainsi réalisé est alors imprégné de résine, par exemple par un procédé de transfert connu tel que l'injection de résine sous pression ou l'infiltration sous vide. La résine est ensuite durcie par polymérisation.

On forme ainsi une liaison entre l'élément structurel et le tube 30 en assurant une continuité des fibres de l'élément structurel de la portion de structure (la partie cousue qui s'étend en porte à faux du tube) à la partie de liaison (la partie libre non cousue qui entoure le tube). La partie de liaison offre une grande surface de contact et permet ainsi une bonne résistance mécanique de la liaison entre l'élément structurel et le tube. De plus, la mise en oeuvre est simple. L'encombrement de la liaison est faible, et le poids ainsi que les coûts de l'ensemble ainsi constitué sont réduits.

De préférence, on interpose entre le tube 30 et l'élément structurel un insert 47 de section sensiblement triangulaire, par exemple en matériau pultrudé, qui comble l'espace s'étendant entre les feuillets au niveau de la couture 48 qui définit la limite entre la portion de liaison et la portion de structure de l'élément structurel 41.

Les figures 6 à 8 représentent un deuxième mode de mise en oeuvre de l'invention qui comprend la réalisation d'un élément structurel comportant deux bras 51, 53 destinées à s'étendre de part et d'autre du tube 30. La fabrication commence l'élaboration de la préforme 59. On commence par le découpage de deux flans 50 dans une plaque de fibres. Les flans 50 sont superposés et liés entre eux dans des zones d'extrémité par des coutures 52, en veillant à laisser libre une zone centrale dans laquelle les flans 50 ne sont pas cousus.

On définit ainsi un élément structurel ayant des portions de structure 51,53 qui formeront les bras, correspondant aux zones cousues, et une portion de liaison, correspondant à la zone non cousue dans laquelle les parties 54 centrales forment des feuillets séparables. Une fente ou espace 56 est ainsi défini entre les feuillets en regard.

Comme cela est illustré à la figure 7, on écarte alors les feuillets 54 pour former un passage central sensiblement circulaire. Dans une étape suivante représentée à la figure 8, on insère le tube 30 entre les feuillets 54 de sorte que ces dernières entourent entièrement le tube 30. Des inserts 57 sont interposés entre les feuillets et le tube à la naissance des feuillets. L'ensemble ainsi réalisé est alors imprégné de résine qui est durcie par polymérisation.

On constitue ainsi une liaison entre le tube 30 et les deux bras 51, 53 qui s'étendent en porte à faux du tube, avec les mêmes avantages que dans le mode de réalisation décrit précédemment.

En variante, les axes des deux poutres peuvent former entre eux en vue de dessus un angle comme présenté figure 9. Dans ce cas on prépare une préforme 69 en découpant deux flans 60, 66 comprenant deux parties centrales 64,68 non cousues formant des feuillets de longueur différentes, le feuillet 64 formé par le flan 60 situé à l'intérieur de l'angle étant plus court que le feuillet 68 formé par l'autre flan 66. Des inserts 67 sont disposés entre le tube et les feuillets, à la naissance de ceux-ci. L'ensemble est ensuite polymérisé.

Lors de l'assemblage des deux flans 60, 66 entre eux, on superpose les extrémités de ces flans qui sont cousues ensemble, pour définir deux bras 61, 63, les portions centrales n'étant pas cousues ensembles pour être laissées libres et former deux feuillets 64, 68. Puis de la même manière que précédemment, les feuillets 64, 68 sont écartés pour insérer entre eux le tube 30. L'ensemble est imprégné de résine qui est durcie par polymérisation.

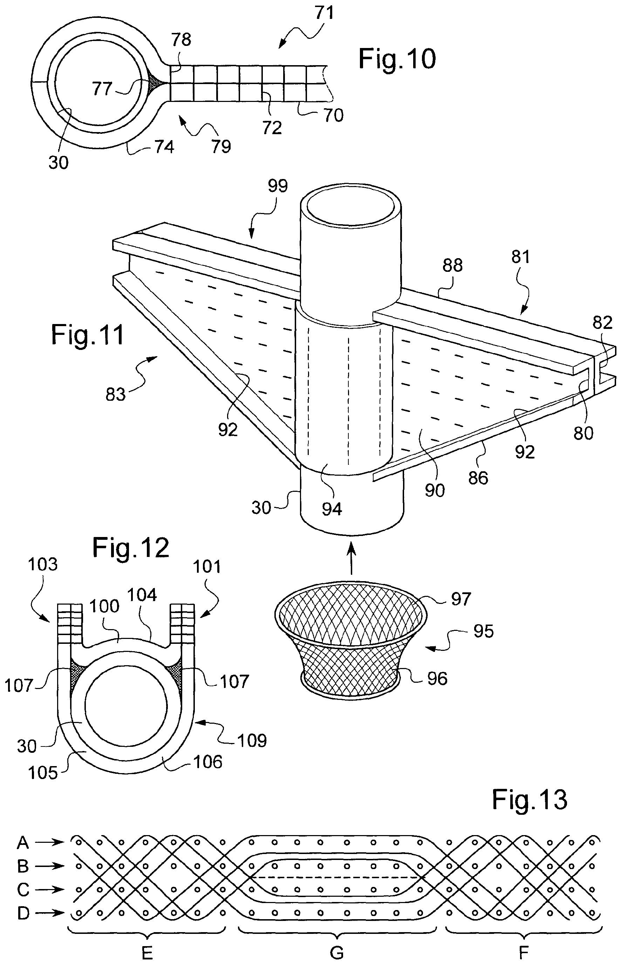

La figure 10 représente un troisième mode de mise en oeuvre du procédé de fabrication, qui ne fait pas partie de l'invention. La fabrication de la préforme 79 commence par le découpage d'un seul flan 70 de forme allongée dans une plaque de fibres. Le flan 70 est alors replié sur lui-même de sorte que ses extrémités 72 soient superposées et cousues pour former la portion de structure 71. La partie centrale 74 du flan est laissée libre pour former deux feuillets en regard qui se rejoignent de façon continue. On insère alors le tube 30 dans la partie centrale 74 entourant complètement le tube. L'ensemble ainsi réalisé est imprégné de résine qui est durcie par polymérisation.

On peut avec le procédé suivant l'invention donner différentes formes aux poutres 41, 51, 53, 61, 71, suivant les découpes et l'assemblage des flans constituant ces poutres.

La figure 11 illustre un exemple de caisson réalisé par le procédé de l'invention. Les portions de structure forment ici des voiles. Comme précédemment, la fabrication de la préforme 99 commence par le découpage de flans 80, 82 dans une plaque de fibres. Les flans 80, 82 sont ensuite superposés et cousus par des coutures 90, pour former deux bras 81, 83 dont tout en laissant libre une zone de liaison centrale dans laquelle les flans forment des feuillets 94 séparables entre lesquels le tube 30 est inséré (un seul des feuillets est visible ici) .

On remarquera que les parties cousues des flans ne sont pas cousues sur toute leur hauteur. On a laissé libres des portions de bord pour pouvoir les plier le long de lignes de couture 92. Les portions de bord ainsi repliées forment des ailes 86, 88 assurant un raidissement des bras 81, 83, et notamment des voiles constitués par les parties cousues des bras.

On peut ajouter un renfort 95 sous la forme d'un manchon tressé comportant une partie cylindrique 96 qui vient s'ajuster sur le tube 30 et une collerette 97 qui vient se plaquer contre les extrémités des ailes 86 proches du tube 30. Lesdites extrémités sont cousues à la collerette 97.

L'ensemble ainsi réalisé est imprégné de résine qui est durcie par polymérisation, pour former deux voiles 81, 83 rigidifiés et fortement liés au tube 30.

Enfin, un autre mode de mise en oeuvre de l'invention est illustré à la figure 12.

La préforme 109 est obtenue à partir de deux flans 100, 106, le flan 106 étant notablement plus long que le flan 100. On superpose les extrémités des flans 100, 106, que l'on coud ensemble pour former des bras 101, 103. Les parties centrales sont laissées libres et forment des feuillets 104, 105 entre lesquels le tube 30 est inséré. Le feuillet 105 est bien plus long que le feuillet 104. Les bras 101, 103 s'étendent parallèlement. Elles peuvent par exemple servir à former des chapes pour recevoir l'axe d'extrémité d'une contrefiche. Des inserts 107 sont insérés entre le tube et les feuillets.

Ainsi, dans tous les modes de mise en oeuvre illustrés, on découpe un ou plusieurs flans, et on superpose deux parties, appartenant soit au même flan, soit à deux flans distincts, pour les coudre partiellement de façon à définir une au moins une portion de structure dans laquelle les parties en regard sont cousues, et au moins une portion de liaison dans les parties en regard sont libres. On insère alors le tube entre les parties dans la zone de liaison dans laquelle les parties sont laissées libres de sorte que ces parties entourent le tube, ce qui permet d'une part une continuité des fibres entre la portion de structure qui s'étend en porte à faux du tube et la portion de liaison qui s'étend autour du tube.

Dans le cas particulier du mode de mise en oeuvre illustré à la figure 10, où l'on n'utilise qu'un seul flan, les parties superposées se rejoignent dans la portion de liaison de sorte que dans cette portion les parties en regard laissées libres forment un anneau.

D'une manière générale, les coutures peuvent être réalisées de différentes manières en particulier en utilisant le point « stitching tufting », le nombre de coutures peut être adapté pour réaliser un renforcement particulier des liaisons.

L'orientation des fibres de renfort constituant les flans peut être adaptée pour privilégier une direction en fonction de l'orientation des contraintes subies par la poutre, pour améliorer la résistance mécanique suivant une méthode bien connue.

Pour améliorer la tenue de l'ensemble, on peut avantageusement coudre l'élément structurel au tube, avant polymérisation. De telles coutures sont illustrées sur la figure 11. Elles s'étendent parallèlement à l'axe du tube et relient les feuillets au tube.

Sur tous les exemples illustrés, l'élément structurel est obtenu à partir d'une préforme élaborée à l'aide d'un ou deux flans superposés et cousu dans une portion de structure, qui formera un bras, une chape ou un voile qui s'étend en saillie du tube, tandis qu'une autre portion est laissée libre pour former les feuillets.

On peut réaliser la préforme autrement. A la figure 13, et de façon très schématique, on illustre un tissu comportant quatre plis superposés A, B, C, D de fibres qui sont reliés par des fils de trame qui, dans des parties E, F, lient intimement les plis A, B, C, D pour former les portions de structure de la préforme, mais, dans une partie G, laissent libres les plis de sorte qu'ils puissent être séparés en deux feuillets. On a représenté en pointillés la séparation possible entre les deux feuillets.

On peut encore partir d'un tissu 3D ou 2,5D comportant plusieurs plis superposés entre eux et reliés par des fils de trame, et détramer localement les plis pour les rendre séparables entre eux dans la portion de liaison, de façon à former les feuillets.

L'invention n'est pas limitée à ce qui vient d'être décrit, mais englobe toute variante entrant dans le cadre défini par les revendications.

## Revendications

1. Procédé de fabrication d'une pièce de structure comportant une partie tubulaire (30) en matériau composite de laquelle un élément structurel en matériau composite s'étend en saillie comportant les étapes de :
- façonner une préforme (49 ; 59 ; 69 ; 79 ; 99) comportant un empilement de plusieurs plis superposés de sorte que sur au moins une partie de la préforme appelée à former une portion de structure, les plis sont solidarisés entre eux, et sur au moins une autre partie de la préforme appelée à former une portion de liaison au tube, les plis sont séparables pour former deux feuillets (44 ; 54 ; 64, 68 ; 74 ; 94) en regard ;
- insérer un tube (30) entre les feuillets de la portion de liaison, de sorte que les feuillets entourent au moins partiellement le tube;
- coudre les feuillets au tube ;
- imprégner de résine l'ensemble formé par le tube et la préforme, la résine étant ensuite durcie par polymérisation, de sorte que le tube forme la partie tubulaire et la préforme forme l'élément structurel de la pièce de structure,
la préforme comportant deux flans découpés dans une plaque de plis superposés, les flans étant cousus entre eux dans au moins une partie pour former la portion de structure, et étant laissés libres dans au moins un autre partie pour former la portion de liaison au tube, de sorte que dans cette portion, chaque flan forme l'un des feuillets (44 ; 54 ; 64, 68 ; 94).

2. Procédé selon la revendication 1, dans lequel l'un des flancs est plus long que l'autre, les extrémités des flancs étant cousues entre elles de façon à laisser subsister deux feuillets (64, 68 ; 104, 105) dont l'un est plus long que l'autre.

3. Procédé selon la revendication 1, dans lequel les extrémités ne sont pas entièrement cousues, des bords (86, 88) étant laissés libres pour être rabattus le long d'une couture (92) en vue de former des raidisseurs de la portion de structure.

4. Procédé selon la revendication 1, dans lequel on dispose un insert (47 ; 57 ; 67 ; 77) de section sensiblement triangulaire entre le tube et les feuillets, à la naissance de ceux-ci.

## Patentansprüche

1. Verfahren zur Herstellung eines Strukturteils, das einen rohrförmigen Teil (30) aus einem Verbundwerkstoff umfasst, von dem ein Strukturelement aus einem Verbundwerkstoff absteht, wobei das Verfahren die Schritte umfasst:
- Formen eines Vorformlings (49; 59; 69; 79; 99), der einen Stapel aus mehreren übereinander angeordneten Schichten umfasst, derart, dass auf mindestens einem Teil des Vorformlings, der dazu bestimmt ist, einen Strukturabschnitt zu bilden, die Schichten miteinander verbunden sind, und auf mindestens einem anderen Teil des Vorformlings, der dazu bestimmt ist, einen Verbindungsabschnitt mit dem Rohr zu bilden, die Schichten trennbar sind, um zwei gegenüberliegende Blätter (44; 54; 64, 68; 74; 94) zu bilden;
- Einfügen eines Rohres (30) zwischen die Blätter des Verbindungsabschnittes, derart, dass die Blätter das Rohr zumindest teilweise umgeben;
- Nähen der Blätter an das Rohr;
- Imprägnieren der aus dem Rohr und dem Vorformling gebildeten Einheit mit Harz, wobei das Harz anschließend durch Polymerisation ausgehärtet wird, so dass das Rohr den rohrförmigen Teil und der Vorformling das Strukturelement des Strukturteils bildet,
wobei der Vorformling zwei Zuschnitte umfasst, die aus einer Platte aus übereinander angeordneten Schichten ausgeschnitten sind, wobei die Zuschnitte miteinander in mindestens einem Teil vernäht sind, um den Strukturabschnitt zu bilden, und in mindestens einem anderen Teil frei gelassen werden, um den Verbindungsabschnitt mit dem Rohr zu bilden, derart, dass in diesem Abschnitt jeder Zuschnitt eines der Blätter (44; 54; 64, 68; 94) bildet.

2. Verfahren nach Anspruch 1, bei dem einer der Zuschnitte länger als der andere ist, wobei die Enden der Zuschnitte miteinander vernäht werden, derart, dass weiterhin zwei Blätter (64, 68; 104, 105) bestehen, von denen eines länger ist als das andere.

3. Verfahren nach Anspruch 1, bei dem die Enden nicht vollständig vernäht werden, wobei Ränder (86, 88) frei gelassen werden, um entlang einer Naht (92) zur Bildung von Versteifungen des Strukturabschnittes umgeschlagen zu werden.

4. Verfahren nach Anspruch 1, bei dem man zwischen dem Rohr und den Blättern am Anfangspunkt derselben einen Einsatz (47; 57; 67; 77) mit einem im Wesentlichen dreieckigen Querschnitt anordnet.

## Claims

1. A method of fabricating a structural part comprising a tubular portion (30) from which there projects a structural element made of composite material, the method comprising the steps of:
• shaping a preform (49; 59; 69; 79; 99) comprising a stack of a plurality of superposed plies such that over at least a fraction of the preform that is to form a structural portion, the plies are secured to one another, and over at least another fraction of the preform that is to form a portion for connecting to the tube, the plies are separable so as to form two facing sheets (44; 54; 64; 68; 74; 94);
• inserting a tube (30) between the sheets of the connection portion so that the sheets surround the tube at least in part;
• stitching the sheets to the tube ;
• impregnating with resin the assembly made of the tube and the preform, the resin being subsequently hardened by polymerization, such that the tube forms the tubular portion and the preform forms the structural element of the structural part,
the preform comprising two blanks cut out from a pad of superposed plies, the blanks being stitched together in at least one fraction to form the structural portion, and being left free in at least one other fraction to form the portion for connection to the tube, whereby in said portion each blank forms one of the sheets (44; 54; 64; 68; 94).

2. A method according to claim 1, wherein one of the blanks is longer than the other, the ends of the blanks being stitched together so as to leave two remaining sheets (64, 68; 104, 105), one of which is longer than the other.

3. A method according to claim 1, wherein the ends are not completely stitched together, edges (8b, 88) being left free so as to be folded along a line of stitching (92) in order to form stiffeners for the structural portion.

4. A method according to claim 1, wherein an insert (47; 57; 67; 77) of substantially triangular section is placed between the tube and the sheets, where the sheets start.
